# EUROPÄISCHE PATENTANMELDUNG

(11) **EP 0 847 029 A2**
(43) Veröffentlichungstag der Anmeldung: **10.06.1998**
(21) Anmeldenummer: 97119864.3
(22) Anmeldetag: 13.11.1997
(51) Int. Cl.: G07C 5/08

(54) **Verfahren zur Speicherung unfallbezogener Daten mit einem Unfalldatenspeicher**

(30) Priorität: 04.12.1996 DE 19650236
(71) Anmelder: Mannesmann VDO Aktiengesellschaft, 60388 Frankfurt/M. (DE)
(72) Erfinder: Gruler, Martin, Dipl.-Ing. (FH), 78554 Aixheim (DE); Bacic, Helmut, Dipl.-Ing. (FH), 78126 Königsfeld (DE)

(57) **Zusammenfassung**

Zur Verbesserung eines Verfahrens zur Speicherung unfallbezogener Daten mit einem Unfalldatenspeicher, der über einen von einem Mikroprozessor verwalteten Ringspeicher verfügt, in den fortlaufend unfallbezogene Daten eingeschrieben werden, wird vorgeschlagen, beim Auftreten einzelner Daten, die auf ein Unfallgeschehen hindeuten, die Daten eines zusammenhängenden Speicherbereichs aus dem Ringspeicher ohne Unterbrechung von dessen Datenaufzeichnung in einen linearen Speicher zu kopieren.

## Beschreibung

Die Erfindung betrifft ein Verfahren zur Speicherung unfallbezogener Daten mit einem Unfalldatenspeicher gemäß dem ersten Anspruch.

Aus der Schrift EP 0 118 818 B1 ist ein Verfahren zur kurzzeitigen Aufnahme bzw. Speicherung von unfallbezogenen Daten und Ereignissen bei Kraftfahrzeugen bekannt, wobei sämtliche erfaßten Daten in digitaler Form zeitlich fortlaufend in einem durch einen zentralen Takt gegebenen zeitlichen Abstand auf Speicherplätze eines Festspeichers durch Definieren einer in einer Maximalschleife umlaufenden Adressierung eingeschrieben werden und wobei beim Auftreten eines durch ein Unfallgeschehen verursachten Triggerereignisses die Adressierung durch Startadressenerweiterung (Änderung der Startadresse) in mindestens eine weitere, die bisherigen Festspeicheradressen nicht mehr enthaltende Sekundäradressierschleife übergeht, und zwar derart, daß sämtliche zeitlich vor dem Unfall liegenden Daten bis zur Auswertung unlöschbar gespeichert bleiben.

Dieses bekannte Speicherverfahren für einen Unfalldatenspeicher erweist sich in mehrfacher Hinsicht als nachteilig. Eine Startadressenerweiterung beim Auftreten eines Triggerereignisses bedeutet, daß der Mikroprozessor des Unfalldatenspeichers binnen weniger Millisekunden entscheiden muß, ob tatsächlich eine Unfallsituation vorliegt. Dazu sind aber eine Reihe sehr komplexer Berechnungen erforderlich. Diese äußerst kurzfristige Bewertung der erfaßten Daten stellt mithin sehr hohe Anforderungen an die Leistungsfähigkeit des im Unfalldatenspeicher implementierten Mikroprozessors sowie auch an die einzusetzenden Auswerteverfahren. Überdies ist die Entscheidungsunsicherheit aufgrund der wenigen, in der Kürze der Zeit auswertbaren Daten recht groß.

Ferner hat das Verlassen der primären Speicherschleife naturgemäß auch zur Folge, daß der Speicherbereich des Ringspeichers für eine nachfolgende Datenaufzeichnung nicht mehr zur Verfügung steht, wodurch die im Unfalldatenspeicher installierte Speicherkapazität nicht optimal genutzt wird. Da ein vermarktungsfähiger Unfalldatenspeicher in der Lage sein muß, mehrere in Folge eintretende Unfallereignisse zu registrieren, müssen beim herkömmlichen Verfahren im Unfalldatenspeicher mehrere Ringspeicher vorgehalten und vom Mikroprozessor des Unfalldatenspeichers verwaltet werden. Dies führt zu einer aufwendigen Beanspruchung des Mikroprozessors, was wegen der aus Kostengründen eher moderaten Leistungsfähigkeit des verwendbaren Mikroprozessors zu Lasten der einsetzbaren Auswerteverfahren geht.

Es ist die Aufgabe der vorliegenden Erfindung, ein Verfahren zur Speicherung unfallbezogener Daten mit einem Unfalldatenspeicher dahingehend zu verbessern, daß die Auswertesicherheit der Daten erhöht, die durch die Speicherverwaltung bedingte Mikroprozessorbeanspruchung verringert und der Nutzungsgrad der im Unfalldatenspeicher vorgehaltenen Speicherkapazität gesteigert wird.

Die Aufgabe wird durch die Merkmale des ersten Anspruchs gelöst. Die abhängigen Ansprüche zeigen vorteilhafte Ausgestaltungen der gefundenen Lösung.

Die Erfindung geht davon aus, daß in einem Unfalldatenspeicher ein von dessen Mikroprozessor verwalteter Ringspeicher vorgesehen ist, in den fortlaufend unfallbezogene Daten eingeschrieben werden. Beim Auftreten eines auf ein Unfallgeschehen hindeutenden Triggerereignisses werden die Daten eines zusammenhängenden Speicherbereichs des Ringspeichers kopiert und auf einen linearen Speicher übertragen. Die primäre Datenaufzeichnung geht unterdessen ohne jede Unterbrechung im Ringspeicher weiter. Das Triggerereignis löst lediglich einen Kopiervorgang aus, so daß zunächst im Ringspeicher erfaßte Daten dann auch in einem zweiten Speicher zur Verfügung stehen. Es können auch ohne weiteres mehrere Folgeunfälle aufgezeichnet werden, obwohl im Unfalldatenspeicher nur ein einziger Ringspeicher vorgesehen ist.

Der zu übertragene Speicherbereich ist in seiner Dauer frei definierbar und schließt in der Regel Daten aus der Zeit vor dem Triggerereignis ein sowie solche Daten, die dem Triggerereignis innerhalb einer bestimmten Dauer nachfolgen. Ein Triggerereignis ist dadurch gekennzeichnet, daß einzelne erfaßte Daten plötzlich vorgegebene, festgelegte Kriterien erfüllen. Das Kriterium kann eine einfache Schwellwertüberschreitung, aber auch von äußerst komplexer Natur sein. Die Daten selbst bestehen in der Regel aus Datensätzen, die Meßwerte und Schaltsignale beinhalten. Gemessen werden insbesondere die Längs- und Querbeschleunigung des Fahrzeug sowie dessen Geschwindigkeit. Die Schaltsignale enthalten eine Aussage über den Betriebszustand der Brems-, Licht- und Blinkeinrichtung des Fahrzeugs sowie bedarfsweise auch über den von anderen Fahrzeugaggregaten. Dabei erfassen geeignete Sensoren die Meßwerte und Schaltsignale. Der Unfalldatenspeicher tastet die Ausgänge der Sensoren in einem zeitlichen Takt ab und faßt zeitgleiche Meßwerte und Schaltsignale zu einem Datensatz zusammen.

Die vorgeschlagene Lösung hat überdies den Vorteil, daß die im Ringspeicher erfaßten Datensätze nicht notwendigerweise komplett kopiert werden müssen, sondern bei Bedarf kann das Kopieren auch selektiv anhand praxisgerecht festgelegter Kriterien erfolgen. In jedem Fall muß beim Auftreten eines auf ein Unfallgeschehen hindeutenden Triggerereignisses nicht in kürzester Zeit entschieden werden, ob die erfaßten Daten tatsächlich auf einen Unfall hindeuten. Eine geringe Anfangsvermutung reicht für das Auslösen des Triggerereignis aus. Die größere Aussagesicherheit ergibt sich aus einer anschließenden genauen Prüfung der Daten in ihrem zeitlichen Verlauf, denn dem Mikroprozessor steht Zeit zur Verfügung, um durch eine Auswertung der dem Triggerereignis vorausgehenden und ihm nachfolgenden Daten eine solide Entscheidung zu treffen. Die Aussage bezüglich eines Unfalls wird aufgrund der breiteren Entscheidungsgrundlage bedeutend sicherer. Sollte diese gründlichere Datenauswertung zu dem Ergebnis gelangen, daß ein Unfall mit hoher Wahrscheinlichkeit nicht vorliegt, weil die Daten einen für einen Unfall untypischen Verlauf genommen haben, so kann der Speicherbereich im linearen Speicher, in den zuletzt Daten kopiert wurden, beim nächsten Triggerereignis wieder freigegeben und überschrieben werden.

Da der Ringspeicher fortlaufend weiter benutzt wird, werden die im Unfalldatenspeicher installierten Speicherressourcen besser genutzt und liegen nach dem Auftreten eines auf ein Unfallgeschehen hindeutenden Triggerereignisses nicht brach. Der lineare Speicher, in den Daten aus dem Ringspeicher kopiert werden, kann ein Festspeicher, aber auch ein anderes Speichermedium wie eine Diskette sein. Auch kann sich dieses Speichermedium gerätetechnisch außerhalb des Unfalldatenspeichers befinden, so daß die Daten zB via Datenfernübertragung vom Ringspeicher dorthin übertragen werden. Allein die Kapazität dieses Speichers entscheidet, wie viele verschiedene Unfallereignisse vom Unfalldatenspeicher registriert werden können. Auch entscheidet weitgehend unabhängig von der Konfiguration des Ringspeichers nur die Ausgestaltung dieses linearen Speichers, wie viele Daten zu einem bestimmten Triggerereignis aufgezeichnet werden können, wodurch sich eine viel flexiblere Datenerhebung ergibt. Die Anzahl speicherbarer Ereignisse sowie die Menge der zu einem Ereignis gehörenden Daten werden damit nicht mehr von der Auslegung des Ringspeichers bestimmt. Es ist auch ersichtlich, daß das vorgeschlagene Verfahren eine weitere, die bisherigen Festspeicheradressen nicht mehr enthaltende Sekundäradressierschleife, die sämtliche zeitlich vor dem Unfall liegenden Daten bis zur Auswertung unlöschbar speichert, nicht vorsieht, wodurch die vom Mikroprozessor zu leistende Arbeit bezüglich der Speicherverwaltung reduziert wird.

Ein Nachteil des Verfahrens nach EP 0 118 818 B1 besteht auch darin, daß der vorgesehene Adressensprung eine Unterbrechung der Datenaufzeichnung zufolge hat, weil der Mikroprozessor mit Berechnungen zur Auswertung der erfaßten Daten beschäftigt ist, bevor er sich der weiteren Datenerfassung wieder zuwenden kann. Dadurch ergibt sich beim Speicherbereichswechsel eine Lücke in der Datenaufzeichnung, was gerade in diesem Moment äußerst kritisch ist. Die vorgeschlagene Einleitung eines Kopiervorgangs vermeidet hingegen diesen Nachteil und stellt eine unterbrechungsfreie Datenaufzeichnung sicher.

Sehr vorteilhaft ist auch die flexible Aufteilung der auf den Zeitpunkt des Auftretens eines auf ein Unfallgeschehen hindeutenden Triggerereignisses bezogenen Vor- und Nachlaufphase. Die Länge der kopierbaren Vorlaufphase kann sich bis über die gesamte Ringspeichertiefe erstrecken. Unschwer ist aber auch die Wahl eines kürzeren Abschnitts möglich, der bei Bedarf sogar flexibel angepaßt werden kann. Nachdem die Dauer der Vorlaufphase festliegt, beginnt das Kopieren der Daten auf den linearen Speicher beim ältesten Eintrag im Ringspeicher, so daß ein anschließendes Sortieren der Daten nicht erforderlich ist, da die ältesten Einträge immer am Anfang des linearen Speichers zu stehen kommen. Dadurch wird die Datenauswertung vereinfacht, weil für die Auswertung ein chronologisch zusammenhängender Datenbereich zur Verfügung steht.

Da die mit Berechnungen verbundene Datenauswertung nicht mit dem Aufzeichnungsverfahren vermischt ist, ergibt sich auch eine einfachere und übersichtlichere Struktur für die Programmierung des Mikroprozessors. Insbesondere ergibt sich ein Vorteil bei der Schaffung von Gerätevarianten, weil das Programm modular ohne komplexe Verflechtungen aufgebaut werden kann.

Auch ist das vorgeschlagene, durch einen einfachen Kopiervorgang gekennzeichnete Speicherverfahren unabhängig von der Taktrate, mit der der Unfalldatenspeicher sensierte Daten abtastet. Selbst bei einer heute gebräuchlichen Taktrate von 500 Hz für die Erfassung schnellveränderlicher fahrdynamischer Daten verbleibt dem Mikroprozessor für den Kopiervorgang genügend Zeit, weil der Systemtakt des Mikroprozessors sehr viel größer ist als der Takt zur Datenerfassung und die Kopierfunktion als solche eine vom Mikroprozessor auf einfache Weise zu bewältigende Aufgabe ist. Die im Ringspeicher hinterlegten Daten können also kopiert werden, bevor sie durch neue Daten überschrieben werden. Das Kopieren erfolgt dadurch, daß Daten im Mikroprozessor dupliziert werden. Der Kopiervorgang kann parallel zur Datenerfassung ausgeführt werden, wodurch eine Unterbrechung der Datenaufzeichnung vermieden wird.

## Patentansprüche

1. Verfahren zur Speicherung unfallbezogener Daten mit einem Unfalldatenspeicher, der über einen von einem Mikroprozessor verwalteten Ringspeicher verfügt, in den fortlaufend unfallbezogene Daten eingeschrieben werden,
dadurch gekennzeichnet,
daß beim Auftreten einzelner Daten, die auf ein Unfallgeschehen hindeuten (Triggerereignis), die Daten eines zusammenhängenden Speicherbereichs aus dem Ringspeicher ohne Unterbrechung von dessen Datenaufzeichnung in einen linearen Speicher kopiert werden.

2. Verfahren nach Anspruch 1, dadurch gekennzeichnet, daß der zu übertragene Speicherbereich in seiner Dauer frei definierbar ist und Daten aus der Zeit vor dem Triggerereignis einschließt sowie solche Daten, die dem Triggerereignis innerhalb einer bestimmten Dauer nachfolgen.

3. Verfahren nach einem der vorangegangenen Ansprüche, dadurch gekennzeichnet, daß die Daten vom Ringspeicher in chronologischer Reihenfolge in den linearen Speicher kopiert werden.

4. Verfahren nach einem der vorangegangenen Ansprüche, dadurch gekennzeichnet, daß die Daten selektiv anhand praxisgerecht festgelegter Kriterien in den linearen Speicher kopiert werden.

5. Verfahren nach einem der vorangegangenen Ansprüche, dadurch gekennzeichnet, daß der lineare Speicher, in den Daten aus dem Ringspeicher kopiert werden, eine Diskette oder ein anderes nicht fest mit dem Unfalldatenspeicher verbundenes Speichermedium ist.
